# EUROPEAN PATENT APPLICATION

(11) **EP 0 672 570 A1**
(43) Date of publication of application: **20.09.1995**
(21) Application number: 95301653.2
(22) Date of filing: 14.03.1995
(51) Int. Cl.: B62B 3/14

(54) **Shopping trolley**

(30) Priority: 15.03.1994 GB 9405004
(71) Applicant: CLARES MERCHANDISE HANDLING EQUIPMENT LIMITED, Wells, Somerset BA5 1UT (GB)
(72) Inventor: Holloway, John Graham, Balsall Common, Coventry CV7 7DZ (GB)
(74) Representative: Brown, Kenneth Richard

(57) **Abstract**

It is known to provide a shopping trolley which basically comprises a wheeled chassis (4) carrying an upwardly open basket (6) and a rear push handle, with a retractable supplementary load carrier (30). Such a carrier commonly comprises a low-level shelf which is mounted to the chassis and which can be stowed away beneath the basket. In its extended position, the shelf projects rearwardly from beneath the basket to provide a load surface for, for example, bulky cartons or crates of drinks; the shelf slides between its extended and retracted positions.

The invention seeks to improve on the known arrangements by ensuring that the shelf is sufficiently lifted at its rear end in the retracted position to facilitate proper telescopic nesting of the chassis parts of adjacent trolleys, and yet adopts a convenient orientation for loading/unloading in the extended position. This object is achieved by arranging that in the retracted position of the shelf, a support member (50) supporting the shelf rearwardly of a guided sliding front shelf portion, is at a higher position relative to the chassis than in the extended position of the shelf.

## Description

This invention relates to shopping trolleys of the kind commonly provided to customers in self-service retail establishments such as supermarkets.

In its normal form of construction, such a trolley comprises a chassis which includes a base frame mounting front and rear pairs of wheel elements, usually swivel castors, and an upwardly open metal wire basket fixedly mounted on the chassis. The basket is provided at its rear end with a transverse push handle by which a user may propel the trolley, and a hinged metal wire flap which forms the rear wall of the basket, and which can be hinged upwardly to allow entry into the basket space of the forward basket portion of a similar trolley, thereby to permit telescopic nesting of such trolleys.

Such shopping trolleys have, over a period of many years, undergone significant development and improvement, and the particular area of improvement to which the present invention relates concerns the provision of a supplementary load carrier for heavy and/or bulky items such as cartons or crates of drinks. It is inconvenient and awkward, using the above-described conventional form of trolley, to load and unload such heavy and/or bulky items of purchase into and from the trolley basket. Firstly, such items, if very bulky, may occupy a large part of the space within the basket, leaving insufficient remaining space for accommodating the customers' other items of purchase; secondly, if the item or items in question are also very heavy, such as in the case of crates of drinks, it can be difficult to lift them into and out of the basket over the basket's top rim.

Accordingly, a number of forms of supplementary load carrier have been proposed. In one general form, one or more displaceable components are provided to form a low-level load surface beneath the handle and behind the basket when required, and are stowable beneath the basket when the supplementary load carrying capacity is unnecessary.

One particular form of this generic type comprises a shelf which is slidably displaceable between a forward position stowed away beneath the basket and a rear position projecting rearwardly behind the bottom of the basket.

The present invention seeks to improve the operability of such a construction of shopping trolley with a forwardly and rearwardly slidable shelf.

According to the present invention there is provided a shopping trolley comprising a support chassis, a basket mounted on the chassis and a supplementary load support in the form of a shelf which is slidably displaceable between a retracted position in which it lies stowed beneath said basket and an extended position in which it projects rearwardly relative to the basket, the sliding movement of the shelf being guided at a front portion of the shelf by elongate slide guide means which is fixedly mounted on said chassis and with which guide follower means attached to the shelf is slidably engaged, wherein rearwardly of said guide follower means said shelf is supported from beneath by a support means, the arrangement being such that in said retracted position of the shelf said support means supports a rear portion of the shelf and is at a higher position relative to said chassis than in said extended position of the shelf.

Such vertical displacement of the support means ensures minimum obstruction by the rear of the shelf in its retracted position to trolley nesting, and provides a convenient extended shelf position for loading/unloading.

In the described embodiments, the support means is slidable relative to a further slide guide means mounted on the chassis behind the elongate slide guide means, the further slide guide means defining the path of movement of the support means during forward retraction and rearward extension of the shelf. The further slide guide means defines a guide slot having upper and lower portions, the arrangement being such that the support means is positioned, respectively, at the upper and lower portions in the retracted and extended shelf positions.

Preferably, there is provided means for retaining the shelf in the retracted position, the retaining means being adapted to hold the support means at the higher position thereof. Such retaining means may comprise an upper portion of the further slide guide means defining a seat in which the support means is retained by the downward force of the shelf supported thereon. In a described embodiment, the further slide guide means includes a first portion having a lower end defining a lower position for the support means when the shelf is in its extended position, the upper portion defining the seat, and an intermediate portion defining a peak position in the path of movement of the support means, the peak position being above the higher position of the support member in the retracted position of the shelf.

Preferably, the shelf is slidably engaged with the support means so that in the extended position a substantial load carrying portion of the shelf projects rearwardly beyond the support means and so that at least part of the load carrying portion slides forwardly over the support means during sliding movement of the shelf to its retracted position thereof.

The elongate slide guide means is preferably downwardly inclined towards the front of the trolley so that the front of the shelf moves downwardly during retraction of the shelf. Thus, in its retracted position the shelf is downwardly inclined toward the front of the trolley, and in its extended position it is downwardly inclined toward the rear of the trolley.

Some embodiments of the invention will now be described by way of example with reference to the accompanying drawings, in which:
Fig. 1 is a side elevational view of one embodiment of a shopping trolley according to the invention, showing the shelf in its rearwardly extended position;
Fig. 2 shows the trolley of the first embodiment with the shelf in its forwardly retracted position;
Fig. 3 is a side elevational view of a second embodiment of a shopping trolley according to the invention, showing the shelf in its rearwardly extended position;
Fig. 4 shows the trolley of the second embodiment with the shelf in its forwardly retracted position;
Fig. 5 is a side elevational view of a third embodiment of a shopping trolley according to the invention, showing the shelf in its rearwardly extended position; and
Fig. 6 shows the trolley of the third embodiment with the shelf in its forwardly retracted position.

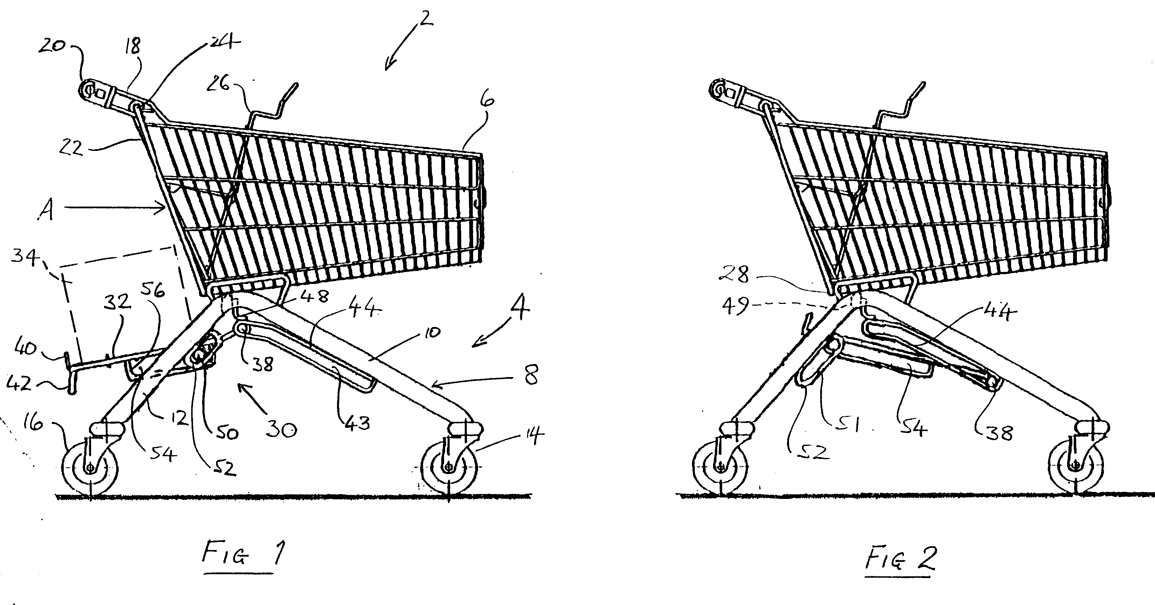

With reference to Figs. 1 and 2, a shopping trolley 2 comprises a support chassis 4 and an upwardly open wire basket 6 mounted on top of the chassis 4. The chassis 4 comprises a base frame which includes two tubular steel side elements 8, each bent to form front and rear inclined legs 10 and 12, respective front and rear pairs of swivel castors 14 and 16 being mounted at the lower ends of these pairs of legs 10 and 12.

The basket 6 is formed with rearwardly projecting handle support brackets 18 to which respective ends of a rear push handle (not seen in the figure) are attached by means of handle fixing elements 20. The rear wall 22 of the basket is arranged so that when the front end of the basket of a similar trolley is pushed against it from the rear in the direction of arrow A, it can swing upwardly into the interior of the basket about the upper rear edge 24, to allow telescopic nesting of the trolleys. This rear wall 22 may also be provided with a centre section 26 which can swing forwardly about the lower edge 28 of the wall to form a child seat.

There is provided a supplementary load carrying device 30 which comprises a forwardly and rearwardly slidable rigid load shelf 32 mounted between the side elements 8 of the base frame 4. This shelf 32 is of steel wire construction, and can slide between a forward position illustrated in Fig. 2, in which it is stowed away beneath the basket 6, and a rear position shown in Fig. 1 in which it extends rearwardly from beneath the rear portion of the basket, between the two rear legs 12. In this rearwardly projecting position, the shelf 32 can support a bulky and/or heavy item of purchase 34, such as a carton, or bottle crate.

The shelf is formed from pieces of heavy gauge wire welded together to form a generally rectangular flat support member, and is formed at its rear end with an upwardly projecting stop 40 for preventing the load 34 slipping rearwardly off the shelf and a downwardly projecting handle portion 42 by which the shelf can be manipulated.

The forward and rearward displacement of the shelf is guided by means of a guide arrangement which will now be described. It will be understood that this arrangement is symmetrical about the centre line of the trolley and that the figures only show the half of the arrangement provided on one side of the trolley; the half on the far side of the trolley not shown in the drawings corresponds symmetrically with the components to be described.

The forward end of the shelf is provided with two laterally projecting slider lugs 38.

Each slider lug 38 is disposed within a first guide slot 43 formed by a first slide guide in the form of a closed first wire guide rail 44 fixed between and beneath the forwardly inclined legs 10. Though not evident from the figures, these guide rails 44 are spaced at their rear, upper ends inwardly from the side elements 8 toward to the trolley centre line. At their forward ends, these first wire guide rails are fixed, e.g. welded, to the underside of the forwardly inclined legs 10, the upper rear ends being fixed to a laterally extending bracket 48 attached to a cross-bar 49 (see Fig. 2) fixed between the side elements 8.

The forward end of the shelf is therefore always supported by the guide rails 44. Support for the shelf rearwardly of the slider lugs 38 is provided by a support member in the form of a transverse support bar 50, outer ends of which are slidably mounted to the opposite sides of the base frame 4 beneath the rear legs 12. The opposite ends of the support rod 50 are located in, and can slide along respective second guide slots 51 formed by respective second slide guide means in the form of second guide rails 52 fixed beneath the legs 12. The rod also passes laterally through third guide slots 54 formed beneath the shelf 32 by third slide guide means in the form of guide rails 56 fixed at opposite sides to the underside of the shelf. It should be noted that the transverse support rod 50 may be replaced by two support lugs, each located in and displaceable along a respective pair of the second and third guide rails 52, 56. In either form, the support member 50 provides a displaceable fulcrum support over which the shelf rides when sliding between the retracted and extended shelf positions of Figures 2 and 1, respectively.

The metal slider lugs 38 and the ends of the support bar 50 may be provided with plastic slider caps (not shown) slidably engaging in the respective first and second guide rails 44 and 52 to produce a smooth and quiet sliding action.

Operation of the arrangement is as follows.

In the forward, stowed-away position of the shelf 32, as shown in Figure 2, the slider lugs 38 are located and supported from beneath at the forward ends of the first guide rails 44. The rear of the shelf 32 is supported from beneath by the support rod 50 (or individual support lugs) which in this position of the shelf, is at the upper, forward end of the second guide slot 51, and at the rear end of the third guide slot 54. The constructional geometry is such that the friction engagement of the lugs 38 with the rail 44, and the rod 50 with the second and third rails 52 and 56 serves to hold the shelf in this retracted, forwardly declined position.

To place the shelf in its extended in-use position, the customer will grasp the handle 42 and pull the shelf so that it will slide rearwardly to the position shown in Fig. 1. During this sliding movement, the slider lugs 38 will slide rearwardly and upwardly along the first guide slots 43, and the underside of the shelf 32 will slide rearwardly on the support rod 50, which will move along the third guide slot 54. This support rod 50 will also move downwardly and rearwardly in the second guide slot 51 so that in the fully extended position of the shelf 32, the slider lugs 38 are located at the rear, upper ends of the first guide slots 43, and the support rod 50 is located at the rear lower end of the second guide slots 51, the shelf being rearwardly cantilevered about the support rod 50, with the forward end restrained from above by the first guide rail 44.

Thus, in its rearwardly extended position, the shelf 32 is slightly rearwardly declined, as shown in Fig. 1, for ease of loading by the user.

After use, and following removal of the supplemental load 34 from the shelf 32, the shelf 32 may be manually returned to its stowed-away position by the user manipulating the shelf using the handle 42, or the shelf may be automatically returned to its stowed away position when a similar trolley is telescopically nested from behind. When this happens, the front legs 10 of the following trolley will engage the rear end of the shelf and simultaneously lift and forwardly push the shelf to cause the slider lugs 38 to slide forwardly along the first guide slots 43 and the shelf 32 to ride over the support rod 50.

At the position (not shown) where the rear end of the third guide rail 56 engages the support rod 50 lying at the rear lower end of the second guide slot 51 the shelf is sufficiently rettracted to be out of the user's way, but is not yet fully retracted to its final home position associated with full trolley nesting. From this intermediate position further forward pushing of the shelf causes the support rod 50 to move forwardly and upwardly along the second guide slot 51 so as to complete movement to the position shown in Fig. 2, in which the support rod 50 simultaneously lies at the rear end of the third guide slot 54 and the upper, forward end of the second guide slot 51. This shelf movement to the final home position is normally effected by the trolley nesting operation.

This arrangement therefore provides for the support rod 50 to become vertically displaced so that in the fully stowed away position of the shelf, its rear end is raised to permit space-efficient nesting of the trolleys, and in its movement to the rearwardly extended, in-use position the support rod 50 will have moved both rearwardly and downwardly so as not only to provide stronger support (by reducing the leverage between the rod 50 and the slider lugs 38), but also to provide a rearwardly declined position of the shelf 32 best suited for ease of loading and unloading.

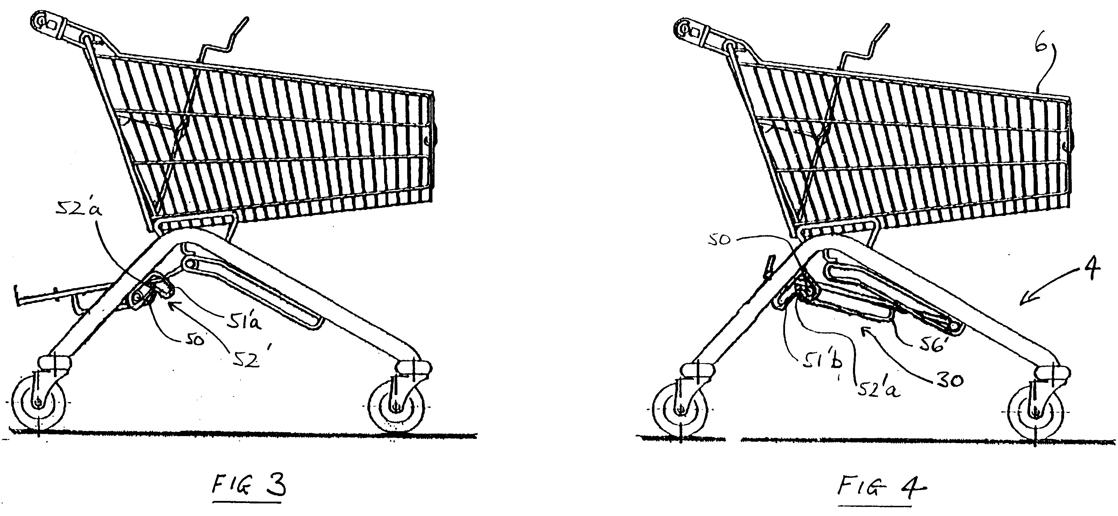

The embodiment illustrated in Figs. 3 and 4 is similar to that of Figs. 1 and 2, except that the second guide rail 52' is formed into an inverted "L" shape to enhance stability in the retracted position of the shelf. As mentioned earlier, such stability in the embodiment of Figs. 1 and 2 relies upon frictional engagement between the slider lugs 38 and the first guide rails 44, and the support rod 50 and the second guide rails 52. The "L" shape of the second guide rails 52' in the embodiment of Figs. 3 and 4 constitutes a means for retaining the shelf in the retracted position and provides a more positive location of the shelf in this position.

More particularly, in this retracted position as shown in Fig. 4, the support rod 50 is located at the lower, forward end of the upper limb 51'a of the second guide slot 51'; the downward force applied to the support rod 50 by the weight of the rear part of the shelf 32 positively holds such support rod 50 in this position. When, on rearward displacement of the shelf 32 the forward end of the third guide rail 56' formed beneath the shelf engages the support rod 50, the latter is urged rearwardly and upwardly in the forward limb 51'a until it rides over the apex 52'a in the lower side of the second guide rail 52, whereafter it can slide downwardly and rearwardly in the rear, lower limb 51'b to its rear, lower position as illustrated in Fig. 3, where it supports the shelf in its rearwardly extended and declined position.

In an alternative form of the retaining means (not shown) to the Figure 3 "L" shaped construction of the second guide slots 51', spring clips attached to second guide rails are adapted to receive and releasably hold the ends of the support rod at the raised position thereof.

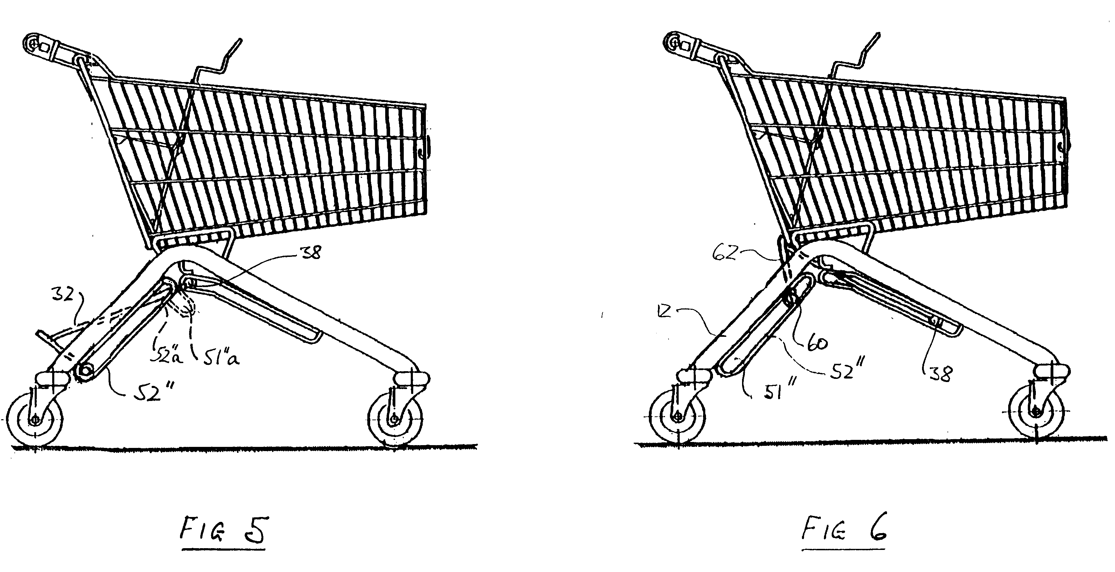

In the embodiments illustrated in Figs. 5 and 6, the shelf is supported behind the slider lugs 38 by means of a pair of second slider lugs 60 provided on or by lower, laterally extending end portions of a rear support bracket 62 fixedly attached at the rear of the shelf 32. These second slider lugs 62 are located in, and can slide along respective elongate guide slots 51'' formed by second closed wire guide rails 52'' fixed beneath and extending along the rear legs 12 of the base frame 4.

With the arrangement illustrated in Figs. 5 and 6, the shelf is again displaceable between its forward position, stowed-away beneath the basket, and its rear position, extending rearwardly from beneath the rear end of the basket. Also, the support for the shelf behind the front slider lugs (provided in this embodiment by the second slider lugs 60) is again guided so as to move between a relatively low, rear position, supporting the shelf in its extended position, and a relatively raised, forward position supporting the shelf in its stowed away position.

The embodiment of Figs. 5 and 6 may be modified by incorporating a similar adaptation as in the Fig. 3/4 embodiment to afford positive retention of the shelf in the retracted position. The modification comprises the formation at the upper, forward ends of the second guide rails 52'' of a downwardly inclined portion to form a downwardly inclined upper second guide slot limb 51''a shown in broken lines in Fig. 5. This limb provides a seat in which the slider lugs 60 are retained by the downward force of the shelf supported thereon. Again, the lugs must be lifted rearwardly over an apex 52''a to allow them to slide toward the rear lower ends of the second guide rails 52'' and the shelf to slide to its extended position. The alternative adaptation of using spring clips attached to the upper forward ends of the second guide rails to provide such positive retention is also applicable to this embodiment.

Accordingly, each of the aforesaid embodiments ensures a smooth, positively guided movement of the shelf between its extended and retracted positions, and provides vertical displacement of the rear end of the shelf between the extended and retracted shelf positions to facilitate telescopic trolley nesting in the retracted shelf position and an advantageous rearwardly declined orientation for loading and unloading in the extended shelf position.

## Claims

1. A shopping trolley comprising a support chassis (4), a basket (6) mounted on the chassis and a supplementary load support (30) in the form of a shelf (32) which is slidably displaceable between a retracted position in which it lies stowed beneath said basket and an extended position in which it projects rearwardly relative to the basket, the sliding movement of the shelf being guided at a front portion of the shelf by elongate slide guide means (44) which is fixedly mounted on said chassis and with which guide follower means (38) attached to the shelf is slidably engaged, wherein rearwardly of said guide follower means said shelf is supported from beneath by a support means (50;60), the arrangement being such that in said retracted position of the shelf said support means supports a rear portion of the shelf and is at a higher position relative to said chassis than in said extended position of the shelf.

2. A shopping trolley according to claim 1 wherein said support means (50;60) is slidable relative to a further slide guide means (52;52';52'') mounted on the chassis behind said elongate slide guide means (44), said further slide guide means defining the path of movement of said support means (50;60) during forward retraction and rearward extension of the shelf.

3. A shopping trolley according to claim 2 wherein said further slide guide means (52;52';52'') defines a guide slot (51;51';51'') having upper and lower portions (51'a,51'b;51''a,51''b), the arrangement being such that said support means is positioned, respectively, at said upper and lower portions in said retracted and extended positions.

4. A shopping trolley according to any preceding claim, including means for retaining said shelf in said retracted position, said retaining means being adapted to hold said support means (50;60) at its said higher position.

5. A shopping trolley according to claim 4, when dependent on claim 2 or 3, wherein said retaining means comprises an upper portion of said further slide guide means defining a seat (51'a;51''a) in which the support means is retained by the downward force of the shelf supported thereon.

6. A shopping trolley according to claim 5 wherein said further slide guide means (52';52'') includes a first portion having a lower end defining a lower position for the support means when the shelf is in its extended position, said upper portion defining said seat, and an intermediate portion (52'a;52''a) defining a peak position in said path of movement of the support means, said peak position being above said higher position of the support member in said retracted position of the shelf.

7. A shopping trolley according to claim 2 or claim 3 or any claim dependent thereon wherein said shelf is slidably engaged with said support means (50) so that in said extended position a substantial load carrying portion of the shelf projects rearwardly beyond said support means and so that at least part of said load carrying portion slides forwardly over said support means during sliding movement of the shelf to its said retracted position.

8. A shopping trolley according to claim 7 wherein said shelf is formed with a third slide guide means (56) in which said support means (50) is slidably engaged, and along which it slides during said sliding movement of said shelf between its retracted and extended positions.

9. A shopping trolley according to claim 8 wherein the sliding engagement of said support means (50) in said third slide guide means (56) is such that when the shelf is forcibly moved to its retracted position, the support means slides along to, and is engaged at, a rear end of a guide slot (54) defined by said third guide means, and is thereby moved upwardly along said further slide guide means (52,52').

10. A shopping trolley according to any of claims 2 to 6 wherein said support means (60) is connected to a fixed point on a rear portion (62) of said shelf so that in both said retracted and extended shelf positions, said rear portion (62) of the shelf is directly supported at said point relative to said further slide guide means (52'').

11. A shopping trolley according to any preceding claim wherein said elongate slide guide means (44) is downwardly inclined towards the front of the trolley so that the front of the shelf (32) moves downwardly during retraction of the shelf.

12. A shopping trolley according to claim 11 wherein in its retracted position the shelf is downwardly inclined toward the front of the trolley, and in its extended position it is downwardly inclined toward the rear of the trolley.

13. A shopping trolley according to any preceding claim wherein said higher position of said support means (50;60), associated with the retracted shelf position, is relatively forward of its lower position associated with the extended shelf position.

14. A shopping trolley according to any preceding claim wherein said support means comprises a support bar (50;60) extending across the chassis, and slidably mounted at its opposite ends to opposite sides of the chassis for movement between said higher position and a lower position.

15. A shopping trolley according to any of claims 1 to 13 wherein said support means comprises first and second support members slidably mounted to respective opposite sides of the chassis for movement between said higher position and a lower position.
